(19) Europäisches Patentamt / European Patent Office / Office européen des brevets

(11) **EP 3 960 800 B1**

(12) **EUROPEAN PATENT SPECIFICATION**

(45) Date of publication and mention of the grant of the patent:
**23.10.2024 Bulletin 2024/43**

(21) Application number: **20193052.6**

(22) Date of filing: **27.08.2020**

(51) International Patent Classification (IPC):
*C08K 3/04* (2006.01)    *C08K 5/00* (2006.01)
*H01B 3/44* (2006.01)    *H01B 7/00* (2006.01)
*H01B 9/00* (2006.01)    *H01B 11/00* (2006.01)
*H01B 11/18* (2006.01)

(52) Cooperative Patent Classification (CPC):
(C-Sets available)
**C08K 3/04; C08K 5/005;** C08K 2201/006;
C08K 2201/015; H01B 3/441    (Cont.)

(54) **USE OF CARBON BLACK FOR REDUCING SHRINKAGE OF POLYOLEFIN COMPOSITION**

VERWENDUNG VON RUSS ZUR SCHRUMPFREDUZIERUNG IN POLYOLEFINZUSAMMENSETZUNGEN

UTILISATION DE NOIR DE CARBONE POUR RÉDUIRE LE RÉTRÉCISSEMENT DES COMPOSITIONS POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.03.2022 Bulletin 2022/09**

(73) Proprietor: **Borealis AG**
**1020 Vienna (AT)**

(72) Inventors:
• **HJÄRTFORS, Anna**
**44486 Stenungsund (SE)**
• **LIU, Yi**
**4021 Linz (AT)**
• **YALALOV, Denis**
**44486 Stenungsund (SE)**
• **ANKER, Martin**
**44486 Stenungsund (SE)**

(74) Representative: **Kador & Partner Part mbB**
**Corneliusstraße 15**
**80469 München (DE)**

(56) References cited:
WO-A1-2014/099360    CN-A- 109 836 652
CN-A- 110 964 242

• DATABASE CA [online] CHEMICAL ABSTRACTS SERVICE, COLUMBUS, OHIO, US; 7 April 2020 (2020-04-07), DONG, MU ET AL: "Preparation of low-shrinkage polyolefin composition and its applications", XP002802071, retrieved from STN Database accession no. 2020:636677
• DATABASE CA [online] CHEMICAL ABSTRACTS SERVICE, COLUMBUS, OHIO, US; 4 June 2019 (2019-06-04), SONG, SHANGDE ET AL: "Raw material of special material for polyethylene pipe, special material for polyethylene pipe and preparation method and application thereof", XP002802072, retrieved from STN Database accession no. 2019:1078460

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 960 800 B1

**(Cont. next page)**

(52) Cooperative Patent Classification (CPC): (Cont.)

C-Sets
**C08K 3/04, C08L 23/00;**
**C08K 3/04, C08L 23/04;**
**C08K 5/005, C08L 23/00;**
**C08K 5/005, C08L 23/04**

**EP 3 960 800 B1**

**Description**

The present invention concerns the use of carbon black for reducing the shrinkage of polyolefin compositions. These polyolefin compositions are used as layer(s) of cables, in particular communication cables such as fiber optic cables (FOC).

Cables, which include power cables for high, medium or low voltage, and communication cables, such as fiber-optic, coaxial and twisted pair cables, usually comprise an inner core surrounded by a sheath consisting of one or more layers for shielding and protecting the inner core. The inner core comprises a conducting element such as a metal wire or a glass fiber.

The outermost layer is often referred to as jacket or jacketing layer and is nowadays made of polymer material, in particular made of ethylene copolymers. The jacket material has to meet a number of properties requirements, which may vary depending on the intended application. Important properties of cable jacketing compositions are good processability, i.e. it should be easy to process the material within a broad temperature range, low shrinkage, high mechanical strength, high surface finish as well as high environmental stress cracking resistance (ESCR). Often, however, good properties in one respect are obtained at the cost of poorer properties in some other respects. An optimal balance of properties is targeted depending on the preferred end application.

Polyethylene materials show some tendency to shrinkage after processing, which is normally due to the presence of internal stresses introduced into the material during extrusion processes. Shrinkage is an important factor which may influence the performance characteristics of both power and telecommunication cables. Fiber optic cables are especially sensitive, while shrinkage of jacketing can influence Fiber attenuation in certain cable designs. In particular, high shrinkage creates stress in the fibers and makes the fibers to bend and touch the surrounding walls which creates attenuation, i.e. signal loss. To get to the lowest possible shrinkage level it is important and desired to eliminate all the possible factors that increase shrinkage.

Furthermore, it is a standard technique to add pigments to a cable jacketing polymer composition in order to change the natural colour of the produced jacket. Often, carbon black is added to the polymer composition for the cable jacketing to produce a black cable jacket. Colouring of a cable jacket may further be required due to safety purposes.

EP 3385958 A1 discloses a cable jacket composition comprising a multimodal olefin copolymer, wherein the multimodal olefin copolymer has density of 0.935-0.960 g/cm$^3$ and MFR2 of 2.2-10.0 g/10 min, and the composition has an ESCR of at least 2000 hours and cable shrinkage of 0.70% or lower.

A cable jacket composition comprising a multimodal olefin copolymer is disclosed in EP 3385959 A1. The multimodal olefin copolymer has a density of 0.935-0.960 g/cm$^3$ and a MFR2 of 1.5-10.0 g/10 min and comprises a bimodal polymer mixture of a low molecular weight homo- or copolymer and a high molecular weight copolymer.

There is still the need in the art to further decrease the shrinkage of polyolefin composition, in particular polyolefin compositions for cables, such as fiber optic cables.

It is thus an object of the invention to further decrease the shrinkage of polyolefin compositions. It is in particular an object of the invention to further decrease the shrinkage of polyolefin compositions while maintaining the MFR2 of the polyolefin composition.

The present invention is based on the surprising finding that all the above objects can be solved by using carbon black in a polyolefin composition for reducing the shrinkage of the polyolefin composition to below 0.9%.

In particular, the invention is based on the surprising finding that reducing the amount of carbon black in a polyolefin composition decreases the shrinkage of the polyolefin composition.

The present invention therefore provides the use of carbon black for reducing the shrinkage of a polyolefin composition to below 0.9%, wherein the polyolefin composition comprises, or consists of,

a) a polyolefin polymer,

b) carbon black in an amount of from 0.05 to 2 wt.% based on the total weight of the polyolefin composition.

The polyolefin composition according to the invention comprises a) a polyolefin polymer. Preferably, the polyolefin polymer is an ethylene homo- or copolymer, more preferably an ethylene copolymer.

Preferably, the polyolefin polymer has an MFR2 of from 0.1 to 10 g/10min, more preferably 0.2 to 5 g/1 0min, more preferably 0.3 to 2.0 g/10min, more preferably of from 0.35 to 1.9 g/10min, more preferably of from 0.4 to 1.8 g/10min and most preferably of from 0.45 to 1.75 g/10min measured according to ISO 1133.

Preferably, the polyolefin polymer is present in an amount of from 95 to 99.9 wt.%, more preferably 97 to 99.8 wt.%, more preferably 97.5 to 99.5 wt.%, based on the total weight of the polyolefin composition.

Preferably, the polyolefin polymer is a multimodal polyolefin polymer, preferably a bimodal polyolefin polymer. The multimodal or bimodal polyolefin polymer is preferably a multimodal or bimodal polyolefin copolymer.

The multimodal polyolefin copolymer in the composition of the invention is preferably a bimodal polymer mixture of a low molecular weight homo- or copolymer, preferably a homopolymer, and a high molecular weight copolymer; wherein the low molecular weight ethylene homopolymer has lower molecular weight than the high molecular weight copolymer.

Preferably the low molecular weight homo- or copolymer is an ethylene homo- or copolymer, preferably an ethylene homopolymer and the high molecular weight copolymer is a copolymer of ethylene and a comonomer.

Commonly used comonomers are olefins having up to 12 carbon atoms, such as α-olefins having 3-12 carbon atoms, e.g. propene, butene, 4-methyl 1-pentene, hexene, octene, decene, etc. Preferably, the comonomer is selected from the list consisting of 1-butene, 4-methyl-1-pentene, 1-hexene and 1-octene.

More conveniently, the multimodal polyolefin copolymer of the invention is a bimodal polymer mixture of a low molecular weight ethylene homopolymer and a high molecular weight copolymer of ethylene and 1-butene.

If a polymer consists of only one kind of monomers then it is called a homopolymer, while a polymer which consists of more than one kind of monomers is called a copolymer. However, according to the invention, the term homopolymer encompasses polymers that mainly consist of one kind of monomer but may further contain comonomers in an amount of 0.09 mol% or lower, more preferably of 0.01 mol% or lower.

It is well known to a person skilled in the art how to produce multimodal, in particular bimodal olefin polymers, or multimodal ethylene polymers, in two or more reactors, preferably connected in series. Each and every one of the polymerization stages can be carried out in liquid phase, slurry or gas phase.

In the production of, say, a bimodal homo- or copolymer, usually a first polymer is produced in a first reactor under certain conditions with respect to monomer composition, hydrogen-gas pressure, temperature, pressure, and so forth. After the polymerization in the first reactor, the reaction mixture including the polymer produced is fed to a second reactor, where further polymerization takes place under other conditions.

Usually, a first polymer of high melt flow rate (low molecular weight) and with a moderate or small addition of comonomer, or no such addition at all, is produced in the first reactor, whereas a second polymer of low melt flow rate (high molecular weight) and with a greater addition of comonomer is produced in the second reactor. The order of these stages may, however, be reversed. Further, an additional reactor may be used to produce either the low molecular weight or the high molecular weight polymer or both.

Exemplary methods for producing multimodal and bimodal polyolefins, including suitable catalysts, can be found in WO 97/03124, EP 3 385 958 A1 and EP 3 385 959 A1 and the references cited therein.

Preferably, the polyolefin polymer has a density of from 920 to 970 kg/m$^3$, more preferably 920 to 960 kg/m$^3$, more preferably 930 to 960 kg/m$^3$, and most preferably of from 935 to 960 kg/m$^3$.

The polyolefin composition of the invention further comprises b) carbon black. Preferably, the carbon black has a BET surface of 20 to 550 m$^2$/g, more preferably 40 to 300 m$^2$/g, more preferably 70 to 210 m$^2$/g, more preferably 90 to 120 m$^2$/g and most preferably 100 to 110 m$^2$/g, measured according to ASTM 6556.

The carbon black preferably has an average particle diameter of 10 to 40 nm, more preferably of 15 to 30 nm.

The carbon black can be added to the polyolefin composition in the form of pure carbon black or in the form of a masterbatch comprising a polymeric carrier. Preferably, the carbon black is added to the polyolefin composition as pure carbon black.

Preferably, the amount of carbon black is from 0.07 to 1.9 wt.%, preferably from 0.08 to 1.8 wt.%, preferably from 0.09 to 1.7 wt.%, preferably from 0.10 to 1.6 wt.%, preferably from 0.11 to 1.5 wt.%, preferably from 0.12 to 1.4 wt.%, preferably from 0.13 to 1.3 wt.%, preferably from 0.14 to 1.2 wt.%, more preferably from 0.15 to 1.1 wt.%, and most preferably from 0.16 to 1.08 wt.%, based on the total weight of the polyolefin composition.

Preferably, the polyolefin composition has an MFR2 of from 0.1 to 10 g/10min, more preferably 0.2 to 5 g/10min, more preferably 0.3 to 2.0 g/10min, more preferably of from 0.35 to 1.9 g/10min, more preferably of from 0.4 to 1.8 g/10min and most preferably of from 0.45 to 1.75 g/10min, measured according to ISO 1133.

Preferably, the polyolefin composition further comprises an UV stabiliser and/or an antioxidant. The antioxidant preferably comprises, or consists of, a phenol-based antioxidant, more preferably a sterically hindered phenol based antioxidant. The antioxidant preferably comprises, or consists of, N,N'-bis(3(3',5'-di-t-butyl-4'-hydroxyphenyl)propionyl)hydrazine, 4,4'-thiobis(2-t-butyl-5-methylphenol), pentaerythrityl-tetrakis(3-(3',5'-di-tbutyl-4-hydroxyphenyl)propionate and/or tris(2,4-di-t-butylphenyl)phosphate, more preferably comprises, or consists of, pentaerythritol tetrakis(3-(3,5-di-tert-butyl-4-hydroxyphenyl)propionate).

The amount of antioxidant is preferably less than 5 wt.%, more preferably less than 2 wt.%, more preferably less than 1 wt.%, more preferably less than 0.9 wt.%, based on the total polyolefin composition. The amount of antioxidant is preferably at least 0.0001 wt.%, more preferably at least 0.01 wt.%, more preferably at least 0.1 wt.%, more preferably at least 0.5 wt.% and most preferably at least 0.7 wt.%, more preferably at least 0.8 wt.%, based on the total polyolefin composition.

Preferably, the shrinkage of the polyolefin composition is below 0.8%, more preferably below 0.7%, and most preferably below 0.6%. The shrinkage is measured as described below.

Preferably, the polyolefin composition is comprised in one or more layers of a cable, more preferably in one layer of a cable.

The cable is preferably a power cable or a communication cable, more preferably a communication cable. The communication cable is preferably a fiber optic cable (FOC), twisted pair cable or a coaxial cable, more preferably a fiber optic cable.

The power cable may be a high-voltage cable, medium-voltage cable and low-voltage cable.

Preferably, the layer of the cable is the outermost layer of the cable.

**EXAMPLE SECTION**

**1. Materials**

Polymer A is a bimodal high density ethylene 1-butene copolymer having a density of 944 kg/m$^3$ and a MFR2 of 1.7 g/10min, commercially available from Borealis.

The CB-MB (carbon black master batch) is a composition of 60.39 wt.% HDPE, 0.11 wt.% pentaerythritol tetrakis(3-(3,5-di-tert-butyl-4-hydroxyphenyl)propionate) and 39.5 wt.% carbon black (CB).

The carbon black (CB) is "Printex alpha A" carbon black having a BET (NSA) surface area of 105 m$^2$/g and an average particle size of 20 nm, commercially available from Orion Engineered Carbons GmbH.

**2. Test methods**

a) Melt flow rate (MFR)

The melt flow rate (MFR) is determined according to ISO1133 - Determination of the melt mass-flow rate (MFR) and melt volume-flow rate (MVR) of thermoplastics - Part 1: Standard method, and is indicated in g/10min. The MFR is an indication of flowability, and hence processability, of the polymer. The higher the melt flow rate, the lower the viscosity of the polymer.

The MFR2 of polyethylene is determined at a temperature of 190 °C and a load of 2.16 kg.

b) Density

The density of the polymer was measured according to ISO1183-1 / method A.

c) Carbon black content (ash)

The sample is weighed in a porcelain crucible that is placed in an oven with nitrogen flow. Nitrogen flow shall be $100 \pm 15$ l/min. Oven is heated to 550°C where polyethylene is burnt. The temperature is kept at 550°C for 15 minutes. After decreasing the temperature to 350°C the sample is taken out and allowed to cool down before being weighed again. The remains consist of carbon black and ash. Ash content was considered so small that it is insignificant to the result.

The calculation is Percentage (carbon black + ash) = (($W_{crucible+sample \ after \ oven}$-$W_{empty \ crucible}$)/($W_{crucible+original \ sample}$ -$W_{empty \ crucible}$))*100

d) Creep and Recovery (Compliance vs. time)

To determine the creep and recovery behaviour, measurements were conducted using a Paar Physica MCR 501 rotational rheometer. A parallelplate geometry with a diameter of 25 mm and a gap of 1.8 mm was chosen as measuring system. The tests were conducted at a set temperature of 190°C. The test starts with a period of imposed constant stress - creep phase. After a certain time the imposed shear stress is removed and the recovery phase starts.

During the creep phase, a constant shear stress of 50 Pa is applied to the sample and the accumulated shear strain (deformation) is measured as a function of time during 100 seconds, each measurement point having a duration of 1 second. In the recovery phase, the shear stress applied to the sample is set to zero pascals (0 Pa) and the recovery shear strain is measured as a function of time during 500 seconds, each measurement point having a duration of 1 second. The recovery shear strain is given by the absolute difference between the actual total strain and the total strain at the end of the creep phase. From the respective shear strains, the compliance (deformation($\gamma$)/constant stress ($\tau$) is determined as a function of time. Using the software Rheoplus from Anton Paar, several parameters are extracted from the respective compliance data, namely:

$\eta_0$ = Zero-shear viscosity

$J_e^0$= Steady state compliance

Je = Elastic compliance

Jv= Viscous compliance

Jmax= Max. creep compliance

Je/Jmax= Elastic share of max. creep compliance Jmax

Jv/Jmax= Viscous share of max. creep compliance Jmax

e) Stress relaxation (Relaxation vs. time)

To determine the relaxation behaviour, stress relaxation tests were conducted using a Paar Physica MCR 501 rotational rheometer. A parallelplate geometry with a diameter of 25 mm and a gap of 1.8 mm was chosen as measuring system. The tests were conducted at a set temperature of 190°C using a strain step of 40%. The test specimens can be prepared in a disk shape by compression moulding with a thickness of about 2 mm, directly on a frame mould or by stamping out from a plaque using a cutting die, with the required diameter. The specimen was loaded between the plates of the pre-heated rheometer and the heating chamber was closed to allow for the sample to melt. Before the application of the strain step, and after loading the sample onto the plates, a waiting time for thermal equilibration inside the heating chamber of about 5 to 10 minutes was applied. The heating chamber was continuously purged with nitrogen during the tests to avoid degradation of the sample. After the step strain is applied, the test geometry was kept on a fixed angular position and the decaying (relaxation) stress (in Pascal, Pa) was determined as a function of time. The relaxation modulus (in Pascal, Pa) as a function of time is then determined by dividing the stress by the applied strain (in dimensionless units). The relaxation behaviour is characterized by the parameter Time (G(t)=100 Pa), which is the time (in seconds) at which the relaxation modulus attains an arbitrary value of 100 Pascal (Pa). Lower values is an indication of lower shrinkage. Materials with high elastic share have taken longer time to relax and consequently most of its elastic stresses would be frozen into the resultant jacket after the drawing operation (Shrinkage).

f) Cable extrusion

The cable extrusion is done on a Nokia-Maillefer cable line. The extruder has five temperature zones with temperatures of 170/175/180/190/190°C and the extruder head has three zones with temperatures of 210/210/210°C. The extruder screw is a barrier screw of the design Elise. The die is a semi-tube on type with 5.9 mm diameter and the outer diameter of the cable is 5 mm. The compound is extruded on a 3 mm in diameter, solid aluminum conductor to investigate the extrusion properties. Line speed is 75 m/min. The pressure at the screen and the current consumption of the extruder is recorded for each material.

g) Shrinkage

The shrinkage of the composition is determined with the cable samples obtained from the cable extrusion. The cables are conditioned in the constant room for one week before the cutting of the samples. The conditions in the constant room are 23±2°C and 50±5% humidity. Samples are cut to 500 mm at least 2 m away from the cable ends after which they are placed in an oven on a talcum bed at 100°C for 24 hours. After removal of the sample from the oven they are allowed to cool down to room temperature and then measured. The shrinkage is calculated according to formula below:

$$[(L_{Before} - L_{After}) / L_{Before}] \times 100 \%$$

wherein L is length.

## 3. Results

Polymer A is compounded with pure carbon black (CB) or with the carbon black masterbatch (CB-MB) and extruded. Details about the comparative examples (CE) and inventive examples (IE) are given in Table 1 below.

Table 1:

|  | CE1 | CE2 | IE1 | IE2 | IE3 |
|---|---|---|---|---|---|
| Polymer A, wt.% | 93.4 | 100 | 99.5 | 99 | 97.5 |
| CB-MB, wt.% | 6.6 |  |  |  | 2.5 |
| CB, wt.% |  |  | 0.5 | 1.0 |  |
| CB content (ash), wt.% | 2.19 | 0.01 | 0.19 | 1.02 | 1.05 |
| MFR2, g/10min | 1.68 | 1.52 | 1.64 | 1.62 | 1.66 |
| Shrinkage, % | 0.74 | 0.43 | 0.57 | 0.66 | 0.68 |
| Creep (Je/Jmax) | 6.95 | 6.45 | 7.21 | 8.44 | 6.45 |
| Stress relaxation | 7.6 | 6.85 | 7.8 | 8.2 | 7.3 |
| Extruder amps | 50 | 55 | 52 | 50 | 50 |
| Screw speed | 57.8 | 60.5 | 58.1 | 58.2 | 58.2 |

As can be seen from Table 1, small amounts of carbon black reduce the shrinkage while maintaining the MFR of the polyolefin composition.

## Claims

1.  Use of carbon black for reducing the shrinkage of a polyolefin composition to below 0.9%, wherein the polyolefin composition comprises

    a) a polyolefin polymer,
    b) carbon black in an amount of from 0.05 to 2 wt.% based on the total weight of the polyolefin composition

    wherein the shrinkage is measured according to the specification.

2.  The use according to claim 1, wherein the polyolefin polymer has an MFR2 of from 0.1 to 10 g/10min measured according to ISO 1133.

3.  The use according to claim 1, wherein the polyolefin polymer is present in an amount of from 95 to 99.9 wt.%, based on the total weight of the polyolefin composition.

4.  The use according to any one of the preceding claims, wherein the carbon black has a BET surface of 20 to 550 $m^2$/g measured according to ASTM 6556.

5.  The use according to any one of the preceding claims, wherein the amount of carbon black is from 0.07 to 1.9 wt.%, based on the total weight of the polyolefin composition.

6.  The use according to any one of the preceding claims, wherein the polyolefin composition has an MFR2 of from 0.1 to 10 g/10min, measured according to ISO 1133.

7.  The use according to any one of the preceding claims, wherein the polyolefin polymer is a multimodal polyolefin polymer.

8.  The use according to any one of the preceding claims, wherein the polyolefin polymer has a density of from 920 to 970 $kg/m^3$, measured according to ISO 1183.

9.  The use according to any one of the preceding claims, wherein the polyolefin polymer is an ethylene homo- or copolymer.

**10.** The use according to any one of the preceding claims, wherein the polyolefin composition further comprises an UV stabiliser and/or an antioxidant.

**11.** The use according to any one of the preceding claims, wherein the shrinkage of the polyolefin composition is reduced to below 0.8%.

**12.** The use according to any one of the preceding claims, wherein the polyolefin composition is comprised in one or more layers of a cable.

**13.** The use according to claim 12, wherein the cable is a power cable or a communication cable.

**14.** The use according to claim 13, wherein the communication cable is a fiber optic cable or a coaxial cable.

**15.** The use according to any one of claims 12 to 14, wherein the layer is the outermost layer of the cable.


**Patentansprüche**

**1.** Verwendung von Ruß für das Reduzieren der Schrumpfung einer Polyolefin-Zusammensetzung auf unter 0,9%, wobei die Polyolefin-Zusammensetzung umfasst:

a) ein Polyolefin-Polymer,
b) Ruß mit einem Anteil von 0,05 bis 2 Gew.-% basierend auf dem Gesamtgewicht der Polyolefin-Zusammensetzung,

wobei die Schrumpfung gemäß der Beschreibung gemessen wird.

**2.** Verwendung nach Anspruch 1, wobei das Polyolefin-Polymer eine Schmelzflussrate (MFR2) von 0,1 bis 10 g/10 min, gemessen gemäß ISO 1133, aufweist.

**3.** Verwendung nach Anspruch 1, wobei das Polyolefin-Polymer mit einem Anteil von 95 bis 99,9 Gew.-% basierend auf dem Gesamtgewicht der Polyolefin-Zusammensetzung vorhanden ist.

**4.** Verwendung nach einem der vorstehenden Ansprüche, wobei der Ruß eine BET-Oberfläche von 20 bis 550 $m^2$/g, gemessen gemäß ASTM 6556, aufweist.

**5.** Verwendung nach einem der vorstehenden Ansprüche, wobei der Anteil von Ruß von 0,07 bis 1,9 Gew.-%, basierend auf dem Gesamtgewicht der Polyolefin-Zusammensetzung, beträgt.

**6.** Verwendung nach einem der vorstehenden Ansprüche, wobei die Polyolefin-Zusammensetzung eine Schmelzflussrate (MFR2) von 0,1 bis 10 g/10 min, gemessen gemäß ISO 1133, aufweist.

**7.** Verwendung nach einem der vorstehenden Ansprüche, wobei das Polyolefin-Polymer ein multimodales Polyolefin-Polymer ist.

**8.** Verwendung nach einem der vorstehenden Ansprüche, wobei das Polyolefin-Polymer eine Dichte von 920 bis 970 kg/$m^3$, gemessen gemäß ISO 1183; aufweist.

**9.** Verwendung nach einem der vorstehenden Ansprüche, wobei das Polyolefin-Polymer ein Ethylen-Homo- oder Copolymer ist.

**10.** Verwendung nach einem der vorstehenden Ansprüche, wobei die Polyolefin-Zusammensetzung weiterhin einen UV-Stabilisator und/oder ein Antioxidationsmittel umfasst.

**11.** Verwendung nach einem der vorstehenden Ansprüche, wobei die Schrumpfung der Polyolefin-Zusammensetzung auf unter 0,8% reduziert wird.

**12.** Verwendung nach einem der vorstehenden Ansprüche, wobei die Polyolefin-Zusammensetzung in einer oder mehreren Schichten eines Kabels enthalten ist.

13. Verwendung nach Anspruch 12, wobei das Kabel ein Stromkabel oder ein Kommunikationskabel ist.

14. Verwendung nach Anspruch 13, wobei das Kommunikationskabel ein Lichtwellenleiter oder ein Koaxialkabel ist.

15. Verwendung nach einem der Ansprüche 12 bis 14, wobei die Schicht die äußerste Schicht des Kabels ist.


**Revendications**

1. Utilisation de noir de carbone pour réduire le retrait d'une composition de polyoléfine à moins de 0,9 %, dans laquelle la composition de polyoléfine comprend

   a) un polymère polyoléfine,
   b) du noir de carbone en une quantité de 0,05 à 2 % en poids par rapport au poids total de la composition de polyoléfine

   dans laquelle le retrait est mesuré conformément à la description.

2. Utilisation selon la revendication 1, dans laquelle le polymère polyoléfine a un MFR2 de 0,1 à 10 g/10 min mesuré selon la norme ISO 1133.

3. Utilisation selon la revendication 1, dans laquelle le polymère polyoléfine est présent en une quantité de 95 à 99,9 % en poids, par rapport au poids total de la composition de polyoléfine.

4. Utilisation selon l'une quelconque des revendications précédentes, dans laquelle le noir de carbone présente une surface BET de 20 à 550 $m^2$/g mesurée selon la norme ASTM 6556.

5. Utilisation selon l'une quelconque des revendications précédentes, dans laquelle la quantité de noir de carbone est de 0,07 à 1,9 % en poids, par rapport au poids total de la composition de polyoléfine.

6. Utilisation selon l'une quelconque des revendications précédentes, dans laquelle la composition de polyoléfine présente un MFR2 de 0,1 à 10 g/10 min, mesuré selon la norme ISO 1133.

7. Utilisation selon l'une quelconque des revendications précédentes, dans laquelle le polymère polyoléfine est un polymère polyoléfine multimodal.

8. Utilisation selon l'une quelconque des revendications précédentes, dans laquelle le polymère polyoléfine a une densité de 920 à 970 kg/$m^3$, mesurée selon la norme ISO 1183.

9. Utilisation selon l'une quelconque des revendications précédentes, dans laquelle le polymère polyoléfine est un homo- ou copolymère d'éthylène.

10. Utilisation selon l'une quelconque des revendications précédentes, dans laquelle la composition de polyoléfine comprend en outre un stabilisant UV et/ou un antioxydant.

11. Utilisation selon l'une quelconque des revendications précédentes, dans laquelle le retrait de la composition de polyoléfine est réduit à moins de 0,8 %.

12. Utilisation selon l'une quelconque des revendications précédentes, dans laquelle la composition de polyoléfine est comprise dans une ou plusieurs couches d'un câble.

13. Utilisation selon la revendication 12, dans laquelle le câble est un câble d'alimentation ou un câble de communication.

14. Utilisation selon la revendication 13, dans laquelle le câble de communication est un câble à fibre optique ou un câble coaxial.

**15.** Utilisation selon l'une quelconque des revendications 12 à 14, dans laquelle la couche est la couche la plus externe du câble.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3385958 A1
- EP 3385959 A1
- WO 9703124 A